# EUROPEAN PATENT SPECIFICATION

(11) **EP 4 089 885 B1**
(45) Date of publication and mention of the grant of the patent: **12.08.2026**
(21) Application number: 21000128.5
(22) Date of filing: 10.05.2021
(51) Int. Cl.: H02K 1/276, H02K 1/28

(54) **ROTOR FOR AN ELECTRIC MACHINE**
ROTOR FÜR EINE ELEKTRISCHE MASCHINE
ROTOR POUR MACHINE ÉLECTRIQUE

(43) Date of publication of application: 16.11.2022
(73) Proprietor: MAHLE International GmbH, 70376 Stuttgart (DE)
(72) Inventor: Cernigoj, Andrej, 5270 Ajdovscina (SI); Volk, Nejc, 6210 Sezana (SI); Vitez, Blaz, 5270 Ajdovscina (SI)

(56) References cited:
- EP-A2- 2 840 692
- US-A- 3 979 821
- US-A- 4 504 755

## Description

### TECHNICAL FIELD

The invention relates to a rotor for an electric machine according to the preamble of independent claim 1. The invention furthermore relates to a method for manufacturing a rotor for an electric machine according to the preamble of independent claim 10.

### BACKGROUND ART

Spoke-type permanent magnet rotors are used in brushless direct current motors and/or permanent magnet synchronous motors forming the rotating part inside the stationary stator, with an air gap between the inner surface of the stator and the outer surface of the rotor. The spoke-type rotor comprises a stack of steel laminations which hold the permanent magnets. The permanent magnets extend in a radial direction with respect to the center of rotation of the rotor and are arranged between adjacent segments of the steel laminations, similar to the spokes of a wheel, hence the name "spoke-type". Each steel lamination can either be made in one-piece or alternatively the steel lamination segments can be separated in the circumferential direction. If the steel laminations are made in one-piece, this has negative implications on the magnetic circuit. If the segments of the steel laminations are separated in the circumferential direction, each segment must be fixed to the shaft in such a way as to withstand the radial forces acting on it.

A known prior art spoke-type permanent magnet rotor with segmented laminations is disclosed in US4504755A. This describes a method of attaching the steel laminations to the shaft by providing the steel laminations with a set of openings which extend radially into the laminations and end in an enlarged triangular shaped space. Molten aluminum is cast into the openings and into the gap between the steel laminations and the shaft in order to fix the laminations with respect to the shaft. In this case the steel lamination segments are initially joined together and subsequently separated. A similar method is disclosed in US3979821A, whereby the openings which extend radially into the laminations end in an enlarged circular space.

**A spoke** rotor permanent magnet electrical machine is also known in EP2840692B1, whereby the stack of rotor laminations are dovetailed circumferentially around an extruded shaft.

### SUMMARY

The rotor according to the invention as defined in independent claim 1 and a method of manufacturing a rotor for an electric machine as defined in independent claim 10 has the advantage that stress concentrations are reduced in a region between the lamination segments and the cast rotor core which holds the segments together.

This is achieved according to a first aspect of the invention with a rotor for an electric machine comprising a stack of ferrous laminations, the stack is divided into segments in the circumferential direction, whereby at least one permanent magnet is arranged between two adjacent segments, each segment comprising an opening extending in a radial direction outwards from a radially inner surface, a rotor core is provided for connecting the adjacent segments, whereby the rotor core is made of a cast non-ferrous material cast in a space radially inwards of the segments and in the radially outwards extending openings in each of the segments, whereby the openings have a generally fir-tree shaped section profile. The fir-tree shaped section profile comprises at least a first radially outer branch and a first radially inner branch, whereby the first radially outer branch has a radially inner side which extends in a direction perpendicular to the radial direction from a minimum branch thickness T1 to a maximum branch thickness L1, and the first radially inner branch has a radially inner side which extends in a direction perpendicular to the radial direction from a minimum branch thickness T2 to a maximum branch thickness L2. The radially inner side of the first inner branch extends in a line from the minimum branch thickness T2 to the maximum branch thickness L2, whereby the line has a tangent having a maximum angle β with respect to the profile reference line, and the radially inner side of the first outer branch extends in a line from the minimum branch thickness T1 to the maximum branch thickness L1 , whereby the line has a tangent having a maximum angle α with respect to the profile reference line, whereby α is in the range of 10° to 60°, and β ≤ 90°, and whereby β/α is in the range of 1.2 to 5.

The fir-tree shaped profile of the openings in the lamination enables a large bearing area to take up the stresses caused by the centrifugal load acting on the cast rotor core. A fir-tree profile has a radially extending central portion with branches extending generally perpendicularly therefrom. Surfaces of the opening section profile which have a component facing away from the axis of rotation of the rotor are subject to centrifugal loading and the fir-tree profile maximizes the area of these surfaces, therefore minimizing stress concentrations. Therefore, for a given load bearing capability, the area of the opening section profile can be reduced compared with prior art designs, so that the amount of casting material can be minimized. The branch thickness is measured from the radially extending profile reference line, which is defined as a straight line running through the rotor centerpoint and a centroid point of the fir-tree shaped profile. The centroid of the fir-tree shaped profile is the geometric centre of the area enclosed by the fir-tree profile and a line which extends across the radially inner opening at the narrowest point. In the case of a fir-tree profile with more than two branches on one side, the radially outer and radially inner branch are to be understood to refer to the radially outermost two branches. It has been found that having the ratio of the angles α and β within this range enables the load to be evenly applied between the two branches. As the radially outer branch is subject to higher loads the stresses can be reduced by reducing the angle α compared to the radially inner branch or branches. In a particularly advantageous embodiment α is in the range of 40° to 60°, and β is in the range of 60° to 80°.

The relationship between the minimum branch thicknesses T1,T2 to the respective maximum branch thicknesses L1,L2 is advantageously in the range 1.2 ≤ L1/T1 ≤1.8 and 1.5 ≤ L2/T2 ≤ 2.0, and the relationship between the maximum branch thicknesses (L1,L2) is in the range 0.5 ≤ L1/L2 ≤ 2.0. The combination of these features provides a geometry with less stress concentrations. More preferably 1.4 ≤ L1/T1 ≤1.6 and 0.7 ≤ L1/L2 ≤ 1.0, in this case the radially inner branch extends further in the direction perpendicular to the radial direction than the radially outer branch. As the radially outer branch does not extend as far in the perpendicular direction it does not interfere as much with the magnetic flux from the magnet and therefore increases the efficiency of the motor.

The radially inner side of the first inner branch can comprise a substantially straight portion which extends along a substantial length (B) of the radially inner side, and the radially inner side of the first outer branch comprises a substantially straight portion which extends along a substantial length (A) of the radially inner side. In an advantageous embodiment the ratio of the length A to the length B of the straight portions are in the range 0.3 ≤ B/A ≤ 0.75, and preferably in the range 0.4 ≤ B/A ≤ 0.6. This enables the radii of the fir-tree profile at the radially inner region of the opening to be larger, thus reducing stress concentrations at the more critical area in the laminations.

The ratio of the length (A) to L1 is in the range 0.2 ≤ A/L1 ≤ 0.4, and the ratio of the length (B) to L2 is in the range 0.05 ≤ B/L2 ≤ 0.25, preferably 0.06 ≤ B/L2 ≤ 0.11. These ratios enable the fir-tree profile to have sufficiently large radii to reduce stress concentrations in the laminations and the casting material whilst maintaining sufficient load bearing capacity and enables the casting material to fill the opening without voids.

In one preferred embodiment, the ratio T2/T1 of the minimum branch thickness T2 to the minimum branch thickness T1 is in the range 0.90 ≤ T2/T1 ≤ 1.25. A ratio within this range has been found to contribute to further evening of the stress distribution between the two branches. In a more preferred embodiment, T2/T1 > 1.05. The distance H1 is the distance measured in the radial direction 11 from the point of the minimal branch thickness T1 of the outer branch 14a to the radially outer tip 18 of the section profile 13. The ratio T1/H1 is in the range of 0.50 ≤ T1/H1 ≤ 0.9, and in the preferred embodiment the T1/H1 = 0.7. These relationships allow for a relatively large minimal branch thickness T1,T2 in relation to H1 which contributes to better durability of aluminium casted core.

The rotor core is generally ring-shaped with a central opening which receives a rotor shaft. Alternatively the rotor core can form itself part of the shaft. The rotor core has radial projections which project radially outwards into the openings in each respective segment.

The rotor core is preferably made of a cast non-ferrous metal, in particular aluminium or aluminium alloy. The cast non-ferrous metal takes the shape of the generally fir-tree shaped section profile when cast into the openings of the segments. This has the advantage over using a machined fir-tree profile that machining tolerances do not need to be accounted for and the surface of the opening in each segment is in direct contact with the rotor core so that stress concentrations are reduced. Alternatively the rotor core can be made out of a plastic material and molded into the openings of the segments, this has the advantage of reduced weight.

In a further aspect of the invention a method for manufacturing a rotor for an electric machine is provided, the method comprising providing a stack of ferrous laminations, the laminations being segmented in the circumferential direction, and with at least one permanent magnet arranged between two adjacent segments, whereby each segment comprises an opening extending in a radial direction outwards from a radially inner surface, whereby the opening has a generally fir-tree shaped section profile,
the generally fir-tree shaped section profile (13) comprises at least a first radially outer branch (14a) and a first radially inner branch (14b),
whereby the first radially outer branch (14a) has a radially inner side (15a) which extends in a direction perpendicular to the radial direction (11) from a minimum branch thickness T1 to a maximum branch thickness L1,
and the first radially inner branch (14b) has a radially inner side which extends in a direction perpendicular to the radial direction (11) from a minimum branch thickness T2 to a maximum branch thickness L2,
wherein the radially inner side (15b) of the first inner branch (14b) extends in a line from the minimum branch thickness T2 to the maximum branch thickness L2, whereby the line has a tangent having a maximum angle β with respect to the profile reference line (17), and
the radially inner side (15a) of the first outer branch (14a) extends in a line from the minimum branch thickness T1 to the maximum branch thickness L1 , whereby the line has a tangent having a maximum angle α with respect to the profile reference line (17), whereby α is in the range of 10° to 60°, and β ≤ 90°, and whereby β/α is in the range of 1.2 to 5, and casting a molten non-ferrous metal into a space radially inwards of the lamination segments and into the radially outwards extending openings in each of the lamination segments to connect adjacent segments together.

The fir-tree shaped section profile can have any of the dimensions described with respect to the rotor according to the invention.

In a further advantageous embodiment, each segmented lamination is initially formed as one piece, and after the step of casting the non-ferrous metal core, adjacent segments are subsequently separated by removing material from the laminations by machining. In this way the manufacturing of the rotor is simplified as the segments do not need aligning with respect to each other, instead the complete stack of laminations can be stacked and aligned together before casting the non-ferrous metal core which holds the segments in position when the segments are subsequently separated in order to improve the magnetic flux.

### BRIEF DESCRIPTION OF THE DRAWINGS

Embodiments will now be described by way of example only with reference to the accompanying drawings, in which:
Figure 1 is a sectional view of a rotor according to the invention,
Figure 2 is an enlarged sectional view of one of the radially outwards extending openings of figure 1.

### DETAILED DESCRIPTION

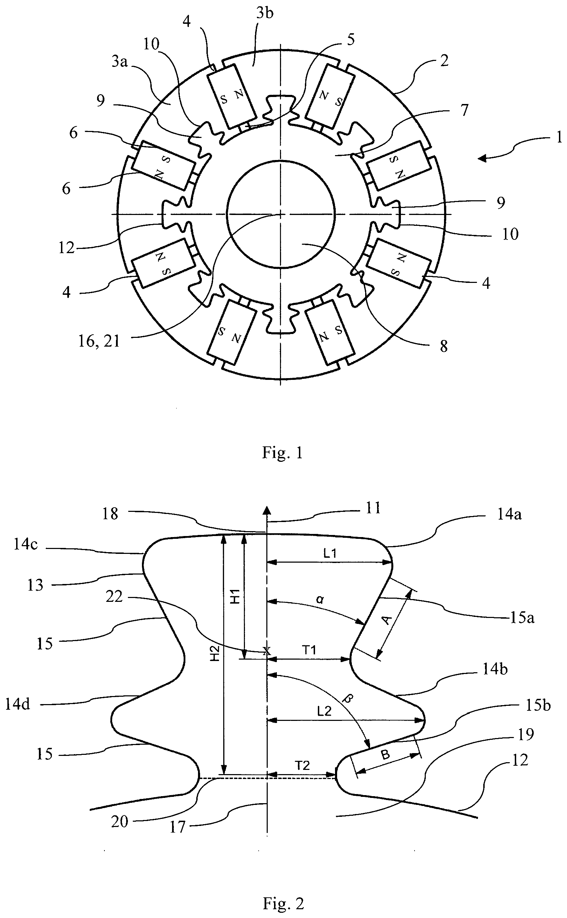

Referring to figures 1 and 2, figure 1 shows a sectional view in the axial direction of a rotor 1 for an electric machine according to one embodiment of the invention. The rotor 1 rotates around a rotational axis 16 and comprises a plurality of ferrous laminations 2 which are stacked one on top of another in the axial direction of the rotor 1. The ferrous laminations 2 are divided into a plurality of segments 3a, 3b etc. in the circumferential direction. In the embodiment shown in figure 1 there are eight such segments 3. Each segment therefore comprises a stack of laminations 2. At least one permanent magnet 4 is arranged between each pair of adjacent segments 3a, 3b. The permanent magnet 4 is arranged with its poles facing the circumferential direction and is received in a recess 6 in each segment 3a, 3b of a pair of lamination segments 3a, 3b. In permanent magnet motors of the spoke type it is desirable to minimize a magnet flux on the radially inner side of the permanent magnets, so that the magnetic flux is concentrated in the radially outer region of the rotor. In the embodiment shown in fig. 1 there is a gap 5 between each pair of adjacent lamination segments 3 radially inwards of the permanent magnets 4 so that the ferrous laminations 2 do not provide a low resistance path for the magnetic flux between the poles of the magnets 4 in this area.

A rotor core 7 is provided for holding and connecting the lamination segments 3. The rotor core 7 is generally ring-shaped with a central opening 8 which receives a rotor shaft (not shown). Alternatively, the rotor core 7 can form itself part of the shaft. Each segment 3 comprises an opening 10 extending in a radial direction 11 outwards from a radially inner surface 12, and the rotor core 7 has radial projections 9 which project radially outwards into the openings in each respective segment 3. The rotor core 7 is made of a cast non-ferrous metal, in particular aluminium or aluminium alloy and is formed by casting the non-ferrous metal in a space radially inwards of the lamination segments and into the radially outwards extending openings 10 in each of the lamination segments 3. The openings 10 have a generally fir-tree shaped section profile 13 and the cast non-ferrous metal takes the shape of the generally fir-tree shaped section profile 13 when cast into the openings 10 of the segments 3. As the radial projections 9 take the shape of the fir-tree shaped section profile 13 the radial projections 9 of rotor core 7 are in contact with the surface of the openings 10 along the whole of the profile 13, fixing the segments 3 to the rotor core 7.

Each segmented lamination 2 can be initially formed as one piece i.e. the segments 3 are initially joined together, and after the step of casting the non-ferrous metal core, adjacent segments 3a, 3b are subsequently separated by removing material from the laminations 2 by machining. In this way the manufacturing of the rotor is simplified as the segments 3 do not need aligning with respect to each other, instead the complete stack of laminations 2 can be stacked and aligned together before casting the non-ferrous metal core which holds the segments in position when the segments are subsequently separated in order to improve the magnetic flux.

The fir-tree shaped profile 13 of the openings 10 enables a large bearing area to take up the stresses caused by the centrifugal load acting on the cast rotor core 7. As can be seen in figure 2, which shows an enlarged portion of one of the segments 3, a fir-tree profile has a central portion extending in the radial direction 11 with branches 14a, 14b extending generally perpendicularly therefrom. Surfaces 15 of the openings 10 which are defined by the parts of the section profile 13 which have components facing away from the axis of rotation 16 of the rotor are subject to centrifugal loading and the fir-tree profile 13 maximizes the area of the these surfaces 15, therefore minimizing stress concentrations. Therefore, for a given load bearing capability, the cross-sectional area of the opening section profile 13 can be reduced compared with prior art designs, so that the amount of casting material can be minimized.

To avoid stress concentrations in the radial projection 9 of the rotor core 7 it is important to distribute the load evenly between the branches of the fir-tree profile 13. At the same time, it is important that the openings 10 in the lamination segments 3 do not negatively affect the magnetic flux. The inventors have found that the relative dimensions of the branches 13 can be chosen to obtain an improved stress distribution without detriment to the magnetic flux.

In the embodiment shown in figure 2 the generally fir-tree shaped section profile 13 comprises a first radially outer branch 14a which extends in a direction perpendicular to the radial direction 11. The outer branch 14a has a radially inner side 15a which extends in a direction perpendicular to the radial direction 11 from a minimum branch thickness T1 to a maximum branch thickness L1, whereby the minimum branch thickness T1 and the maximum branch thickness L1 is the distance measured in a direction perpendicular to the radial direction 11 from the profile reference line 17. Similarly, the first radially inner branch 14b has a radially inner side 15b which extends in a direction perpendicular to the radial direction 11 from a minimum branch thickness T2 to a maximum branch thickness L2. In the embodiment shown, the generally fir-tree shaped section profile 13 is symmetric about the profile reference line 17 such that there are four branches (14a-d).

The profile reference line 17 is defined as a straight line running through the rotor centerpoint 21 and a centroid point 22 of the fir-tree shaped section profile 13. The centroid 22 of the fir-tree shaped profile 13 is the geometric center of the area enclosed by the fir-tree profile 13 and a line 20 which extends across the radially inner opening at the narrowest point.

The radially inner side 15b of the first inner branch 14b extends in a line from the minimum branch thickness T2 to the maximum branch thickness L2, whereby the line has a tangent having a maximum angle β with respect to the profile reference line 17. The radially inner side 15a of the first outer branch 14a extends in a line from the minimum branch thickness T1 to the maximum branch thickness L1 , whereby the line has a tangent having a maximum angle α with respect to the profile reference line 17. According to one embodiment of the invention, α is in the range of 10° to 60°, and β ≤ 90°, and β/α is in the range of 1.2 to 5. According to a more preferred embodiment of the invention α is in the range of 40° to 60°, and β is in the range of 60° to 80°. Having the ratio of the angles α and β within this range enables the load to be evenly applied between the two branches 14a and 14b. As the radially outer branch 14a is subject to higher loads, the stresses can be reduced by reducing the angle α compared to the angle β of the radially inner branch or branches 14b, 14d.

The relationship between the minimum branch thicknesses T1,T2 to the respective maximum branch thicknesses L1,L2 is in the range 1.2 ≤ L1/T1 ≤1.8 and 1.5 ≤ L2/T2 ≤ 2.0, and the ratio of the maximum branch thickness L1 of the first radially outer branch 14a to the maximum branch thickness L2 of the first radially inner branch 14b, L1/L2, is in the range of 0.5 ≤ L1/L2 ≤ 2.0. The combination of these features provides a geometry with less stress concentrations. More preferably 1.4 ≤ L1/T1 ≤1.6 and 0.7 ≤ L1/L2 ≤ 1.0.

The radially inner side 15b of the first inner branch 14b comprises, in the embodiment shown in figure 2, a substantially straight portion which extends along a substantial length (B) of the radially inner side 15b, and the radially inner side 15a of the first outer branch 14a comprises a substantially straight portion which extends along a substantial length (A) of the radially inner side 15a. The ratio of the length A to the length B of the straight portions are in the range 0.3 ≤ B/A ≤ 0.75, and preferably in the range 0.4 ≤ B/A ≤ 0.6. The ratio of the length **(A) to L1** is in the range 0.2 ≤ A/L1 ≤ 0.4, and the ratio of the length (B) to L2 is in the range 0.05 ≤ B/L2 ≤ 0.25, preferably 0.06 ≤ B/L2 ≤ 0.11. These ratios enable the fir-tree profile to have sufficiently large radii to reduce stress concentrations and enabling the casting material to fill the opening without voids between the openings 10 of the segments 3 and the radial projections 9 of the rotor core 7.

The ratio T2/T1 of the minimum branch thickness T2 to the minimum branch thickness T1 is in the range 0.90 ≤ T2/T1 ≤ 1.25. A ratio within this range has been found to contribute to further evening of the stress distribution between the two branches. In the preferred embodiment, T2/T1 is 1.1. The distance H1 is the distance measured in the radial direction 11 from the point of the minimal branch thickness T1 of the outer branch 14a to the radially outer tip 18 of the section profile 13. The ratio T1/H1 is in the range of 0.50 ≤ T1/H1 ≤ 0.9, and in the preferred embodiment the T1/H1 = 0.7. These relationships allow for a relatively large minimal branch thickness T1,T2 in relation to H1 which contributes to better durability of aluminium casted core.

As can be seen in the figure 2, the radially inner branch 14b extends further in the direction perpendicular to the radial direction 11 than the radially outer branch 14a. As the radially outer branch does not extend as far in the perpendicular direction it does not interfere as much with the magnetic flux from the magnet 4 and therefore increases the efficiency of the motor.

The preceding description of the fir tree profile 13 according to the invention can apply to either side of a fir-tree profile, i.e. the left or right side if the profile is asymmetric, or to both sides if the profile is symmetric.

The invention is applicable to rotors for electric machines, including motors or generators.

### LIST OF REFERENCE NUMERALS

1. Rotor
2. Ferrous laminations
3. Lamination segment
4. Permanent magnet
5. Gap
6. Recess
7. Rotor core
8. Central opening
9. Radial projection
10. Opening
11. Radial direction
12. Radially inner surface
13. fir-tree shaped section profile
14. Branches: First branch (a), second branch (b)
15. Surface with components facing away from rotation axis
16. Rotation axis
17. Profile reference line
18. Tip
19. Space
20. Profile border line
21. Rotor centerpoint
22. Centroid point

## Claims

1. A rotor (1) for an electric machine comprising a stack of ferrous laminations (2), the stack is divided into segments (3) in the circumferential direction,
- whereby at least one permanent magnet (4) is arranged between two adjacent segments (3a, 3b),
- each segment (3) comprising an opening (10) extending in a radial direction (11) outwards from a radially inner surface (12),
- a rotor core (7) is provided for connecting the adjacent segments (3a, 3b),
- whereby the rotor core (7) is made of a cast non-ferrous material cast in a space (19) radially inwards of the segments (3) and in the radially outwards extending openings (10) in each of the segments (3),
- whereby the openings (10) have a generally fir-tree shaped section profile (13), **characterized in that**,
- the generally fir-tree shaped section profile (13) comprises at least a first radially outer branch (14a) and a first radially inner branch (14b),
- whereby the first radially outer branch (14a) has a radially inner side (15a) which extends in a direction perpendicular to the radial direction (11) from a minimum branch thickness T1 to a maximum branch thickness L1,
- and the first radially inner branch (14b) has a radially inner side which extends in a direction perpendicular to the radial direction (11) from a minimum branch thickness T2 to a maximum branch thickness L2,
- wherein the radially inner side (15b) of the first inner branch (14b) extends in a line from the minimum branch thickness T2 to the maximum branch thickness L2, whereby the line has a tangent having a maximum angle β with respect to the profile reference line (17), and
- the radially inner side (15a) of the first outer branch (14a) extends in a line from the minimum branch thickness T1 to the maximum branch thickness L1 , whereby the line has a tangent having a maximum angle α with respect to the profile reference line (17), whereby α is in the range of 10° to 60°, and β ≤ 90°, and whereby β/α is in the range of 1.2 to 5.

2. A rotor (1) according to claim 1, whereby α is in the range of 40° to 60°, and β is in the range of 60° to 80°.

3. **A rotor** (1) according to claim 1, **characterized in that** the relationship between the minimum branch thicknesses (T1,T2) to the respective maximum branch thicknesses (L1,L2) is in the range 1.2 ≤ L1/T1 ≤1.8 and 1.5 ≤ L2/T2 ≤ 2.0, and that the relationship between the maximum branch thicknesses (L1,L2) is in the range 0.5 ≤ L1/L2 ≤ 2.0.

4. A rotor (1) according to claim 1, **characterized in that** the that the relationship between the maximum branch thicknesses (L1,L2) is in the range 0.7 ≤ L1/L2 ≤ 1.0

5. A rotor (1) according to one of claims 1 to 4, **characterized in that** the radially inner side (15b) of the first inner branch (14b) can comprise a substantially straight portion which extends along a substantial length (B) of the radially inner side, and the radially inner side (15a) of the first outer branch (14a) comprises a substantially straight portion which extends along a substantial length (A) of the radially inner side, whereby the ratio of the length A to the length B of the straight portions are in the range 0.3 ≤ B/A ≤ 0.75, and preferably in the range 0.4 ≤ B/A ≤ 0.6.

6. A rotor (1) according to claim 5, **characterized in that** the ratio of the length (A) to L1 is in the range 0.2 ≤ A/L1 ≤ 0.4, and the ratio of the length (B) to L2 is in the range 0.05 ≤ B/L2 ≤ 0.25, preferably 0.06 ≤ B/L2 ≤ 0.11

7. A rotor (1) according to one of claims 1 to 6, **characterized in that** the radially inner branch (14a) extends further in the direction perpendicular to the radial direction (11) than the radially outer branch (14b).

8. A rotor (1) according to one of claims 1 to 7, **characterized in that** the ratio T1/H1 is in the range of 0.50 ≤ T1/H1 ≤ 0.9 and the ratio T2/T1 is in the range of 0.90 ≤ T2/T1 ≤ 1.25, whereby H1 is the distance measured in the radial direction (11) from the point of the minimal branch thickness T1 of the outer branch (14a) to the radially outer tip (18) of the section profile (13).

9. A rotor (1) according to any one of the preceding claims, **characterized in that** the rotor core (7) is generally ring-shaped.

10. A method for manufacturing a rotor (1) for an electric machine, the method comprising
- providing a stack of ferrous laminations (2), the stack being divided into segments (3) in the circumferential direction, and with at least one permanent magnet (4) arranged between two adjacent segments (3a, 3b), whereby each segment (3) comprises an opening (10) extending in a radial direction (11) outwards from a radially inner surface (12), whereby the opening (10) has a generally fir-tree shaped section profile (13), **characterized in that**,
- the generally fir-tree shaped section profile (13) comprises at least a first radially outer branch (14a) and a first radially inner branch (14b),
- whereby the first radially outer branch (14a) has a radially inner side (15a) which extends in a direction perpendicular to the radial direction (11) from a minimum branch thickness T1 to a maximum branch thickness L1,
- and the first radially inner branch (14b) has a radially inner side which extends in a direction perpendicular to the radial direction (11) from a minimum branch thickness T2 to a maximum branch thickness L2,
- wherein the radially inner side (15b) of the first inner branch (14b) extends in a line from the minimum branch thickness T2 to the maximum branch thickness L2, whereby the line has a tangent having a maximum angle β with respect to the profile reference line (17), and
- the radially inner side (15a) of the first outer branch (14a) extends in a line from the minimum branch thickness T1 to the maximum branch thickness L1 , whereby the line has a tangent having a maximum angle α with respect to the profile reference line (17), whereby α is in the range of 10° to 60°, and β ≤ 90°, and whereby β/α is in the range of 1.2 to 5,
- and casting a molten non-ferrous metal into a space (19) radially inwards of the segments (3) and into the radially outwards extending openings (10) in each of the segments (3) to connect adjacent segments (3) together.

11. A method for manufacturing a rotor (1) for an electric machine according to claim 10 whereby the lamination segments (3) are initially formed as one piece, and after the step of casting the non-ferrous metal core, adjacent segments (3a, 3b) are subsequently separated by removing material from the laminations (2) by machining.

## Patentansprüche

1. Rotor (1) für eine elektrische Maschine, umfassend einen Stapel aus eisenhaltigen Blechen (2), wobei der Stapel in der Umfangsrichtung in Segmente (3) unterteilt ist,
- wobei mindestens ein Dauermagnet (4) zwischen zwei angrenzenden Segmenten (3a, 3b) angeordnet ist,
- jedes Segment (3) eine Öffnung (10) umfasst, die sich in einer radialen Richtung (11) von einer radial inneren Oberfläche (12) nach außen erstreckt,
- ein Rotorkern (7) zum Verbinden der angrenzenden Segmente (3a, 3b) bereitgestellt ist,
- wobei der Rotorkern (7) aus einem gegossenen nicht eisenhaltigen Material hergestellt ist, das in einen Raum (19) radial einwärts der Segmente (3) und in die sich radial nach außen erstreckenden Öffnungen (10) in jedem der Segmente (3) gegossen ist,
- wobei die Öffnungen (10) ein im Allgemeinen tannenbaumförmiges Querschnittsprofil (13) aufweisen, **dadurch gekennzeichnet, dass,**
- das im Allgemeinen tannenbaumförmige Querschnittsprofil (13) mindestens einen ersten radial äußeren Zweig (14a) und einen ersten radial inneren Zweig (14b) umfasst,
- wobei der erste radial äußere Zweig (14a) eine radial innere Seite (15a) aufweist, die sich in einer Richtung senkrecht zu der radialen Richtung (11) von einer minimalen Zweigdicke T1 bis zu einer maximalen Zweigdicke L1 erstreckt,
- und der erste radial innere Zweig (14b) eine radial innere Seite aufweist, die sich in einer Richtung senkrecht zu der radialen Richtung (11) von einer minimalen Zweigdicke T2 bis zu einer maximalen Zweigdicke L2 erstreckt,
- wobei sich die radial innere Seite (15b) des ersten inneren Zweigs (14b) in einer Linie von der minimalen Zweigdicke T2 bis zu der maximalen Zweigdicke L2 erstreckt, wobei die Linie eine Tangente aufweist, die einen maximalen Winkel β in Bezug auf die Profilreferenzlinie (17) aufweist, und
- sich die radial innere Seite (15a) des ersten äußeren Zweigs (14a) in einer Linie von der minimalen Zweigdicke T1 bis zu der maximalen Zweigdicke L1 erstreckt, wobei die Linie eine Tangente aufweist, die einen maximalen Winkel α in Bezug auf die Profilreferenzlinie (17) aufweist, wobei α in dem Bereich von 10° bis 60° liegt und β ≤ 90° ist, und wobei β/α in dem Bereich von 1,2 bis 5 liegt.

2. Rotor (1) nach Anspruch 1, wobei α in dem Bereich von 40° bis 60° liegt und β in dem Bereich von 60° bis 80° liegt.

3. Rotor (1) nach Anspruch 1, **dadurch gekennzeichnet, dass** die Beziehung zwischen der minimalen Zweigdicken (T1, T2) zu den jeweiligen maximalen Zweigdicken (L1, L2) in dem Bereich von 1,2 ≤ L1/T1 ≤1,8 und 1,5 ≤ L2/T2 ≤ 2,0 liegt, und **dadurch, dass** die Beziehung zwischen den maximalen Zweigdicken (L1, L2) in dem Bereich von 0,5 ≤ L1/L2 ≤ 2,0 liegt.

4. Rotor (1) nach Anspruch 1, **dadurch gekennzeichnet, dass** das die Beziehung zwischen den maximalen Zweigdicken (L1, L2) in dem Bereich von 0,7 ≤ L1/L2 ≤ 1,0 liegt.

5. Rotor (1) nach einem der Ansprüche 1 bis 4,
**dadurch gekennzeichnet, dass** die radial innere Seite (15b) des ersten inneren Zweigs (14b) einen im Wesentlichen geraden Abschnitt umfassen kann, der sich entlang einer wesentlichen Länge (B) der radial inneren Seite erstreckt, und die radial innere Seite (15a) des ersten äußeren Zweigs (14a) einen im Wesentlichen geraden Abschnitt umfasst, der sich entlang einer wesentlichen Länge (A) der radial inneren Seite erstreckt, wobei das Verhältnis der Länge A zu der Länge B der geraden Abschnitte in dem Bereich von 0,3 ≤ B/A ≤ 0,75 und vorzugsweise in dem Bereich von 0,4 ≤ B/A ≤ 0,6 liegt.

6. Rotor (1) nach Anspruch 5, **dadurch gekennzeichnet, dass** das Verhältnis der Länge (A) zu L1 in dem Bereich 0,2 ≤ A/L1 ≤ 0,4 liegt und das Verhältnis der Länge (B) zu L2 in dem Bereich von 0,05 ≤ B/L2 ≤ 0,25, vorzugsweise von 0,06 ≤ B/L2 ≤ 0,11 liegt.

7. Rotor (1) nach einem der Ansprüche 1 bis 6,
**dadurch gekennzeichnet, dass** sich der radial innere Zweig (14a) in der Richtung senkrecht zu der radialen Richtung (11) weiter erstreckt als der radial äußere Zweig (14b).

8. Rotor (1) nach einem der Ansprüche 1 bis 7,
**dadurch gekennzeichnet, dass** das Verhältnis T1/H1 in dem Bereich von 0,50 ≤ T1/H1 ≤ 0,9 liegt und das Verhältnis T2/T1 in dem Bereich von 0,90 ≤ T2/T1 ≤ 1,25 liegt, wobei H1 der in der radialen Richtung (11) gemessene Abstand von dem Punkt der minimalen Zweigdicke T1 des äußeren Zweigs (14a) zu der radial äußeren Spitze (18) des Querschnittprofils (13) ist.

9. Rotor (1) nach einem der vorstehenden Ansprüche,
**dadurch gekennzeichnet, dass** der Rotorkern (7) im Allgemeinen ringförmig ist.

10. Verfahren zum Fertigen eines Rotors (1) für eine elektrische Maschine, das Verfahren umfassend
- Bereitstellen eines Stapels von eisenhaltigen Blechen (2), wobei der Stapel in der Umfangsrichtung in Segmente (3) unterteilt ist, und mit mindestens einem Dauermagneten (4), der zwischen zwei angrenzenden Segmenten (3a, 3b) angeordnet ist, wobei jedes Segment (3) eine Öffnung (10) umfasst, die sich in einer radialen Richtung (11) von einer radial inneren Oberfläche (12) nach außen erstreckt, wobei die Öffnung (10) ein im Allgemeinen tannenbaumförmiges Querschnittprofil (13) aufweist, **dadurch gekennzeichnet, dass,**
- das im Allgemeinen tannenbaumförmige Querschnittsprofil (13) mindestens einen ersten radial äußeren Zweig (14a) und einen ersten radial inneren Zweig (14b) umfasst,
- wobei der erste radial äußere Zweig (14a) eine radial innere Seite (15a) aufweist, die sich in einer Richtung senkrecht zu der radialen Richtung (11) von einer minimalen Zweigdicke T1 bis zu einer maximalen Zweigdicke L1 erstreckt,
- und der erste radial innere Zweig (14b) eine radial innere Seite aufweist, die sich in einer Richtung senkrecht zu der radialen Richtung (11) von einer minimalen Zweigdicke T2 bis zu einer maximalen Zweigdicke L2 erstreckt,
- wobei sich die radial innere Seite (15b) des ersten inneren Zweigs (14b) in einer Linie von der minimalen Zweigdicke T2 bis zu der maximalen Zweigdicke L2 erstreckt, wobei die Linie eine Tangente aufweist, die einen maximalen Winkel β in Bezug auf die Profilreferenzlinie (17) aufweist, und
- sich die radial innere Seite (15a) des ersten äußeren Zweigs (14a) in einer Linie von der minimalen Zweigdicke T1 bis zu der maximalen Zweigdicke L1 erstreckt, wobei die Linie eine Tangente aufweist, die einen maximalen Winkel α in Bezug auf die Profilreferenzlinie (17) aufweist, wobei α in dem Bereich von 10° bis 60° liegt und β ≤ 90° ist, und wobei β/α in dem Bereich von 1,2 bis 5 liegt,
- und Gießen eines geschmolzenen nicht eisenhaltigen Metalls in einen Raum (19) radial innerhalb der Segmente (3) und in die sich radial nach außen erstreckenden Öffnungen (10) in jedem der Segmente (3), um angrenzende Segmente (3) miteinander zu verbinden.

11. Verfahren zum Fertigen eines Rotors (1) für eine elektrische Maschine nach Anspruch 10, wobei die Laminierungssegmente (3) anfänglich einstückig ausgebildet werden und nach dem Schritt des Gießens des nicht eisenhaltigen Metallkerns angrenzende Segmente (3a, 3b) anschließend durch Entfernen von Material von den Laminierungen (2) durch maschinelles Bearbeiten getrennt werden.

## Revendications

1. Rotor (1) pour une machine électrique comprenant un empilement de tôles ferreuses (2), l'empilement étant divisé en segments (3) dans la direction circonférentielle,
- moyennant quoi au moins un aimant permanent (4) est disposé entre deux segments adjacents (3a, 3b),
- chaque segment (3) comprenant une ouverture (10) s'étendant dans une direction radiale (11) vers l'extérieur à partir d'une surface radialement interne (12),
- un noyau de rotor (7) est prévu pour relier les segments adjacents (3a, 3b),
- moyennant quoi le noyau de rotor (7) est constitué d'un matériau non ferreux coulé dans un espace (19) radialement vers l'intérieur des segments (3) et dans les ouvertures s'étendant radialement vers l'extérieur (10) dans chacun des segments (3),
- moyennant quoi les ouvertures (10) ont un profil de section généralement en forme de sapin (13), **caractérisé en ce que**
- le profil de section généralement en forme de sapin (13) comprend au moins une première branche radialement externe (14a) et une première branche radialement interne (14b),
- moyennant quoi la première branche radialement externe (14a) a un côté radialement interne (15a) qui s'étend dans une direction perpendiculaire à la direction radiale (11) d'une épaisseur de ramification minimale T1 à une épaisseur de ramification maximale L1,
- et la première branche radialement interne (14b) a un côté radialement interne qui s'étend dans une direction perpendiculaire à la direction radiale (11) à partir d'une épaisseur de branche minimale T2 jusqu'à une épaisseur de branche maximale L2,
- dans lequel le côté radialement interne (15b) de la première branche interne (14b) s'étend en une ligne allant de l'épaisseur minimale de branche T2 à l'épaisseur maximale de branche L2, moyennant quoi la ligne a une tangente ayant un angle maximal β par rapport à la ligne de référence de profil (17), et
- le côté radialement interne (15a) de la première branche externe (14a) s'étend en une ligne allant de l'épaisseur minimale de branche T1 à l'épaisseur maximale de branche L1, moyennant quoi la ligne a une tangente ayant un angle maximal α par rapport à la ligne de référence de profil (17), moyennant quoi α est dans la plage de 10° à 60°, et β ≤ 90°, et moyennant quoi β/α est compris entre 1,2 et 5.

2. Rotor (1) selon la revendication 1, moyennant quoi α est compris dans la plage de 40° à 60°, et β est compris dans la plage de 60° à 80°.

3. Rotor (1) selon la revendication 1, **caractérisé en ce que** la relation entre les épaisseurs minimales de branches (T1, T2) et les épaisseurs maximales de branches respectives (L1, L2) est dans la plage de 1,2 ≤ L1/T1 ≤1,8 et1,5 ≤ L2/T2 ≤ 2,0, et que la relation entre les épaisseurs maximales de branches (L1, L2) est dans la plage de 0,5 ≤ L1/L2 ≤ 2,0.

4. Rotor (1) selon la revendication 1, **caractérisé en ce que** la relation entre les épaisseurs maximales de branches (L1, L2) est dans la plage de 0,7 ≤ L1/L2 ≤ 1,0.

5. Rotor (1) selon l'une des revendications 1 à 4, **caractérisé en ce que** le côté radialement interne (15b) de la première branche interne (14b) peut comprendre une partie sensiblement linéaire qui s'étend le long d'une longueur sensible (B) du côté radialement interne, et le côté radialement interne (15a) de la première branche externe (14a) comprend une partie sensiblement linéaire qui s'étend le long d'une longueur sensible (A) du côté radialement interne, moyennant quoi le rapport entre la longueur A et la longueur B des parties linéaires est compris entre 0,3 ≤ B/A ≤ 0,75, et de préférence entre 0,4 ≤ B/A ≤ 0,6.

6. Rotor (1) selon la revendication 5, **caractérisé en ce que** le rapport de la longueur (A) à L1 est dans la plage de 0,2 ≤ A/L1 ≤ 0,4, et le rapport de la longueur (B) à L2 est dans la plage de 0,05 ≤ B/L2 ≤ 0,25, de préférence 0,06 ≤ B/L2 ≤ 0,11

7. Rotor (1) selon l'une des revendications 1 à 6, **caractérisé en ce que** la branche radialement interne (14a) s'étend plus loin dans la direction perpendiculaire à la direction radiale (11) que la branche radialement externe (14b).

8. Rotor (1) selon l'une des revendications 1 à 7, **caractérisé en ce que** le rapport T1/H1 est dans la plage de 0,50 ≤ T1/H1 ≤ 0,9 et le rapport T2/T1 est dans la plage de 0,90 ≤ T2/T1 ≤ 1,25, moyennant quoi H1 est la distance mesurée dans le direction radiale (11) du point de l'épaisseur minimale de ramification T1 de la ramification externe (14a) à l'extrémité radialement externe (18) du profil de section (13).

9. Rotor (1) selon l'une quelconque des revendications précédentes, **caractérisé en ce que** le noyau de rotor (7) est généralement en forme d'anneau.

10. Procédé de fabrication d'un rotor (1) pour une machine électrique, le procédé comprenant
- la fourniture d'un empilement de tôles ferreuses (2), l'empilement étant divisé en segments (3) dans la direction circonférentielle, et avec au moins un aimant permanent (4) agencé entre deux segments adjacents (3a, 3b), moyennant quoi chaque segment (3) comprend une ouverture (10) s'étendant dans une direction radiale (11) vers l'extérieur à partir d'une surface radialement interne (12), moyennant quoi l'ouverture (10) a un profil de section généralement en forme de sapin (13), **caractérisé en ce que,**
- le profil de section généralement en forme de sapin (13) comprend au moins une première branche radialement externe (14a) et une première branche radialement interne (14b),
- moyennant quoi la première branche radialement externe (14a) a un côté radialement interne (15a) qui s'étend dans une direction perpendiculaire à la direction radiale (11) d'une épaisseur de ramification minimale T1 à une épaisseur de ramification maximale L1,
- et la première branche radialement interne (14b) a un côté radialement interne qui s'étend dans une direction perpendiculaire à la direction radiale (11) à partir d'une épaisseur de branche minimale T2 jusqu'à une épaisseur de branche maximale L2,
- dans lequel le côté radialement interne (15b) de la première branche interne (14b) s'étend en une ligne allant de l'épaisseur minimale de branche T2 à l'épaisseur maximale de branche L2, moyennant quoi la ligne a une tangente ayant un angle maximal β par rapport à la ligne de référence de profil (17), et
- le côté radialement interne (15a) de la première branche externe (14a) s'étend en une ligne allant de l'épaisseur minimale de branche T1 à l'épaisseur maximale de branche L1, moyennant quoi la ligne a une tangente ayant un angle maximal α par rapport à la ligne de référence de profil (17), moyennant quoi α est dans la plage de 10° à 60°, et β ≤ 90°, et moyennant quoi β la est compris entre 1,2 et 5,
- et le coulage d'un métal non ferreux fondu dans un espace (19) radialement vers l'intérieur des segments (3) et dans les ouvertures s'étendant radialement vers l'extérieur (10) dans chacun des segments (3) pour relier les segments adjacents (3) ensemble.

11. Procédé de fabrication d'un rotor (1) pour une machine électrique selon la revendication 10, moyennant quoi les segments de stratification (3) sont initialement formés d'une seule pièce, et après l'étape de coulée du noyau en métal non ferreux, les segments adjacents (3a, 3b) sont ensuite séparés en enlevant la matière des stratifications (2) par usinage.
